# EUROPEAN PATENT SPECIFICATION

(11) **EP 2 621 093 B1**
(45) Date of publication and mention of the grant of the patent: **03.04.2019**
(21) Application number: 12152961.4
(22) Date of filing: 27.01.2012
(51) Int. Cl.: H04B 1/04

(54) **Mobile wireless communications device with selective power amplifier control and related methods**
Mobile Drahtloskommunikationsvorrichtung mit selektiver Leistungsverstärkersteuerung und zugehörige Verfahren
Dispositif de communication mobile sans fil avec contrôle d'amplificateur de puissance sélective et procédés associés

(43) Date of publication of application: 31.07.2013
(73) Proprietor: BlackBerry Limited, Waterloo, ON N2K 0A7 (CA)
(72) Inventor: Vinayagamoorthy, Sivakaran, Waterloo, Ontario N2L 3W8 (CA); Tulasidas, Sivanesan, Waterloo, Ontario N2L 3W8 (CA)
(74) Representative: Roberts, Gwilym Vaughan

(56) References cited:
- EP-A1- 2 251 975
- EP-A2- 1 237 297
- EP-A2- 1 523 101
- JP-A- 2008 098 830
- US-A1- 2004 021 516
- US-A1- 2009 117 865

## Description

### Technical Field

This application relates to the field of communications, and more particularly, to wireless communications systems and related methods.

### Background

Cellular communication systems continue to grow in popularity and have become an integral part of both personal and business communications. Cellular telephones allow users to place and receive phone calls almost anywhere they travel. Moreover, as cellular telephone technology is advanced, so too has the functionality of cellular devices. For example, many cellular devices now incorporate Personal Digital Assistant (PDA) features such as calendars, address books, task lists, calculators, memo and writing programs, etc. These multifunction devices usually allow users to wirelessly send and receive electronic mail (email) messages and access the internet via a cellular network and/or a wireless local area network (WLAN), for example.

Cellular devices have radio frequency (RF) processing circuits and receive or transmit radio communications signals typically using modulation schemes. The typical cellular device may have multiple transmit and receive pathways from the antenna to a digital signal processor (DSP), each transmit path comprising power amplifier drawing power from a battery. In code division multiple access (CDMA), wideband code division multiple access (W-CDMA), and LTE cellular devices, one of the major contributors of battery power consumption is the linear power amplifier. Several approaches may be used to optimize the power amplifier's efficiency under different operating conditions, such as output power level, peak to average power ratio (PAPR) of the signal, temperature and frequency channel, while meeting adjacent channel leakage ratio (ACLR) targets associated with 3GPP/3GPP2.

One approach may include changing the power amplifier supply voltage based upon power amplifier operating conditions. Typically, the changes are based upon a static or factory calibrated lookup tables, where some parameters are characterized with worst case samples and some parameters are individually calibrated during design and manufacture. A potential drawback to this approach may be that the calibration of the individual power amplifier is time consuming and that it is done with static load conditions, i.e. a 50 Ohm environment where actual operation is a live air condition non-50 Ohm load.

EP153101 A2, discloses a radio transmitter includes a power amplifier, and also includes circuitry for determining a relative distortion level in an output signal, for comparing this relative distortion level with a reference distortion level, and for controlling a bias input of the power amplifier on the basis of the comparison.

The invention is defined by the appended claims.

### Brief Description of the Drawings

FIG. 1 is a schematic block diagram of an example embodiment of a mobile wireless communications device.
FIG. 2 is a detailed schematic block diagram of an example embodiment of a mobile wireless communications device
FIG. 3 is a schematic block diagram of an example embodiment of a modulator from the mobile wireless communications device of FIG. 1.
FIG. 4 is a flowchart illustrating operation of the mobile wireless communications device of FIG. 1.
FIG. 5 is a schematic block diagram illustrating example components of a mobile wireless communications device that may be used with the mobile wireless communications device of FIG. 1.

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communications device may include a processor, a modulator coupled downstream from the processor, a power amplifier coupled downstream from the modulator and having a control voltage input, an antenna coupled downstream from the power amplifier, and a feedback path coupled between the transmit path prior to antenna and the processor. The processor may be coupled to the control voltage input of the switch mode power supply supplying dc power to power amplifier, and may be configured to determine an adjacent channel leakage value based upon the feedback path and to selectively set a supply voltage for the power amplifier via switch mode power supply and input power to the power amplifier based upon the adjacent channel leakage value. Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

In some embodiments, the processor may be configured to selectively set the control voltage for the power amplifier based upon a received power control value. More specifically, the processor may be configured to generate the adjacent channel leakage value to comprise an adjacent channel leakage ratio (ACLR) value.

For example, the processor may be configured to selectively set the control voltage to comprise a drain/collector bias voltage for the power amplifier. The mobile wireless communications device may further comprise a power supply cooperating with the processor and configured to selectively generate the control and/or supply voltage to the power amplifier.

Additionally, the modulator may comprise In-phase (I) and Quadrature (Q) transmit circuits coupled between the processor and the power amplifier. Each of the I and Q transmit circuits may comprise a digital-to-analog converter (DAC), a low pass filter coupled to an output of the DAC, and a mixer coupled to an output of the low pass filter. The feedback path may comprises a directional coupler coupled upstream of the antenna, I and Q receive circuits coupled downstream from the directional coupler, and a fast Fourier transform (FFT) block coupled downstream from the I and Q receive circuits.

The mobile wireless communications device may further comprise a variable gain amplifier coupled downstream from directional coupler. The mobile wireless communications device may further comprise an oscillator configured to generate a local oscillator signal, and the I and Q transmit and receive circuits may be configured to operate based upon the local oscillator signal. The mobile wireless communications device may further comprise a variable gain pre-power amplifier coupled downstream from the directional coupler, and a phase shifter block coupled between the local oscillator and said I and Q receive circuits. In some embodiments, the processor may be configured to selectively operate the I and Q receive circuits in a power save mode.

Another aspect is directed to a method of operating a mobile wireless communications device comprising a processor, a modulator coupled downstream from the processor, a power amplifier coupled downstream from the modulator and having a control voltage input, an antenna coupled downstream from the power amplifier, and a feedback path coupled between the antenna and the processor. The method may include determining an adjacent channel leakage value based upon the feedback path, and selectively setting a control voltage for the power amplifier based upon the adjacent channel leakage value.

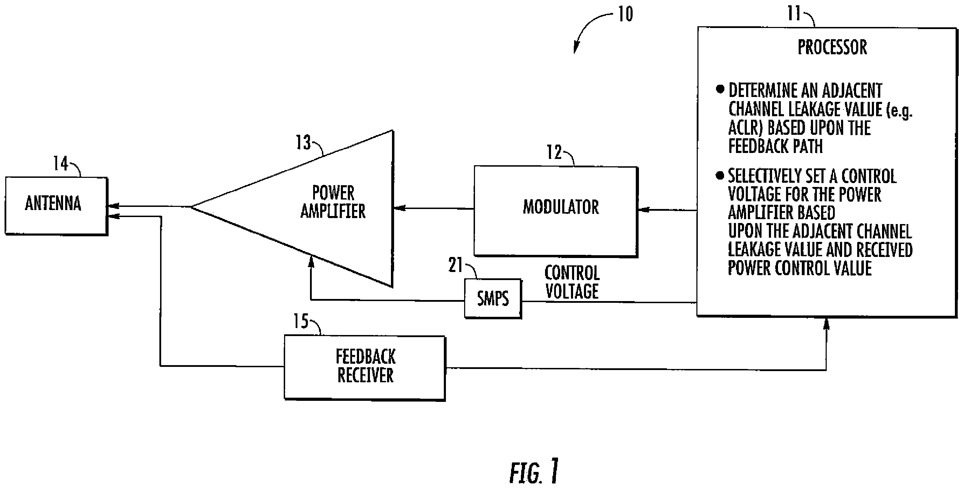

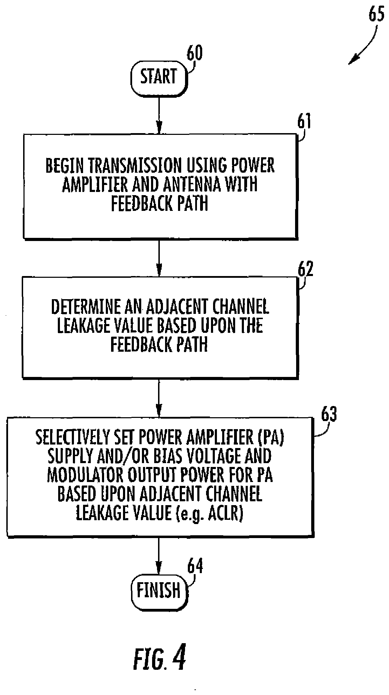

Referring now to FIG. 1, a mobile wireless communications device **10** according to the present disclosure is now described. Moreover, with reference additionally to FIG. **4****,** a flowchart **65** illustrates a method of operating the mobile wireless communications device **10** (Block **60**). The mobile wireless communications device **10** illustratively includes a processor **11,** a modulator **12** coupled downstream from the processor, a power amplifier **13** coupled downstream from the modulator and having a control voltage input , an antenna **14** coupled downstream from the power amplifier, and a feedback receiver **15** coupled between the antenna and the processor.

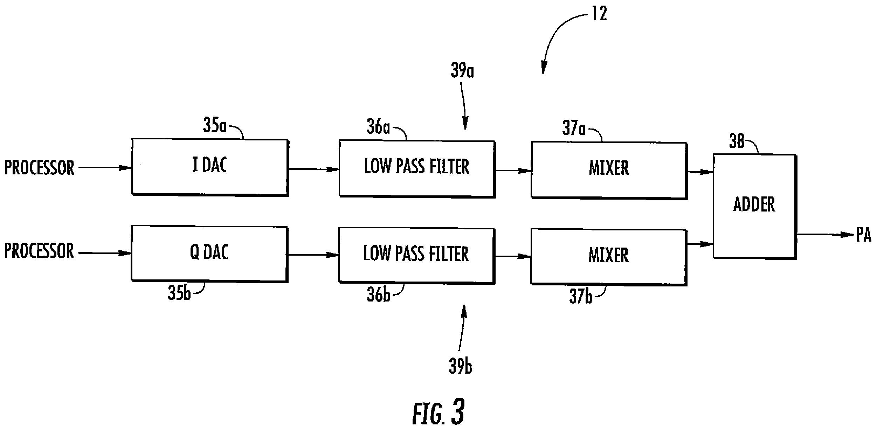

For example, the control voltage input may comprise a bias voltage input, such as a drain voltage input or collector voltage input for the power amplifier **13,** and/or a transmitter automatic gain control voltage signal. In some embodiments, the modulator **12** may comprise a Quadrature amplitude modulator (QAM) (FIG. 3). The processor **11** is illustratively coupled to the control voltage input of the power amplifier **13.** Once transmission starts, (Block **61**), the processor **11** is configured to determine an adjacent channel leakage value based upon the feedback receiver **15** and to selectively set a control voltage for the power amplifier **13** based upon the adjacent channel leakage value (Block **63**). In some embodiments, the processor **11** may be configured to selectively set a control voltage for the power amplifier **13** continuously and in real-time.

More specifically, the processor **11** may be configured to generate the adjacent channel leakage value to comprise an ACLR value, as disclosed in the W-CDMA standard, for example (Block **62**). For example, the processor **11** may reduce the control voltage if the ACLR value meets communication protocol requirements, thereby reducing power consumption. Of course, this may be reversed in embodiments utilizing a logarithmic scale for ACLR.

Advantageously, the mobile wireless communications device **10** may adapt in real time to operate the power amplifier **13** more efficiently than the typical cellular device. Indeed, in the typical cellular device, the drain voltage for the power amplifier may be calibrated once at the factory using a fixed load system (e.g. 50 Ohm). The calibration results are typically stored in a lookup table in the cellular device. Of course, this does not accurately represent the ever changing environment of the actual cellular device in use, which experiences antenna load changes, output power level changes, temperature and frequency channel changes, and varying PAPR requirements. Moreover, the lookup table for the typical cellular device has a limited number of samples and a limited dynamic range, which provides sub-optimal operation of the power amplifier. Lastly, the calibration at the factory may be time consuming and difficult.

Helpfully, the mobile wireless communications device **10** monitors these conditions (i.e. antenna load, target output power level, temperature and frequency channel, and PAPR operation requirements) and selectively adjusts the control voltage of the power amplifier **13** to operate efficiently. In particular, the mobile wireless communications device 10 adjusts the control voltage based upon a threshold ACLR value, which is based upon the selected communication protocol.

Moreover, in the mobile wireless communications device 10, the power amplifier loading conditions are taken in to account while changing the power amplifier **13** control voltage for the given power needs. In good voltage standing wave ratio (VSWR) conditions, the power amplifier **13** control voltage can be reduced as compared to the typical 50 Ohm test system, giving additional savings. The mobile wireless communications device **10** does not depend on ACLR characterization for parameters, such as temperature and frequency and power level, so that a minimum possible power amplifier **13** control voltage can be used. With the mobile wireless communications device **10,** the time consuming factory calibration for ACLR may be avoided. Additionally, the mobile wireless communications device **10** does not need a power detector since the feedback receiver **15** can be used to detect transmission power for a wider dynamic range, which may reduce power consumption and manufacturing cost.

In some embodiments, the processor **11** may be configured to selectively set the control voltage for the power amplifier **13** additionally based upon a received power control value, i.e. using both the adjacent channel leakage value and the receive power control value. For example, the mobile wireless communications device **10** may receive power control bit values from an associated wireless base station (not shown), and the processor **11** may use these power control bit values to set the control voltage.

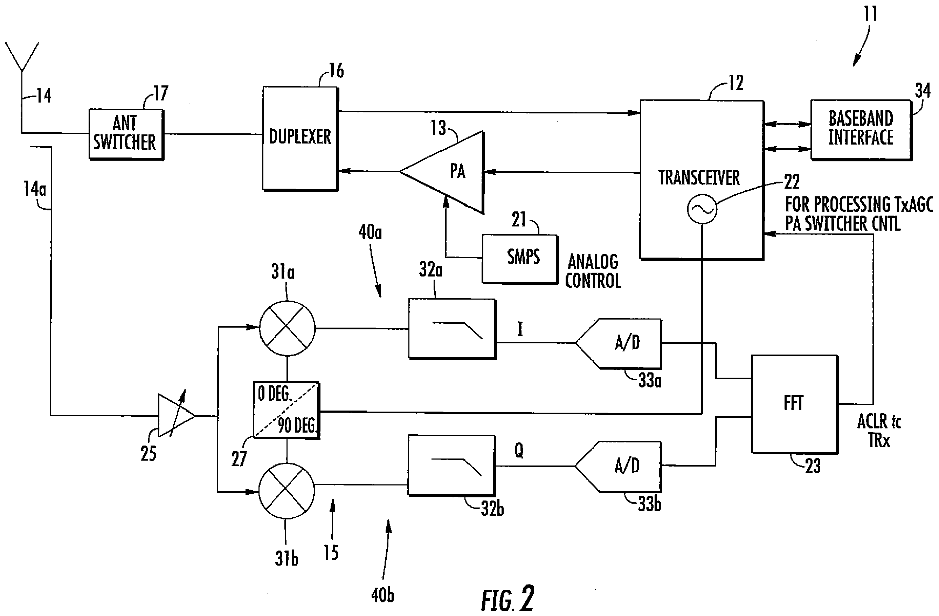

Referring additionally to FIG. 2, the mobile wireless communications device **10** further comprises a power supply (illustratively shown as a switched mode power supply) 21 cooperating with the processor **11** and the modulator (shown here as part of a transceiver block) **12,** and configured to selectively generate the control voltage. The mobile wireless communications device **10** further comprises a duplexer **16** coupled downstream from the power amplifier **13,** which is configured to selectively deliver signals to and from the antenna **14** to appropriate transmit and receiver paths in the transceiver **12.** The mobile wireless communications device illustratively includes an antenna switch block **17** coupled between the duplexer **16** and the antenna **14.** In the illustrated embodiment, the processor **11** illustratively includes a baseband interface block **34.**

The feedback receiver **15** illustratively includes a directional coupler **14a** coupled upstream of the antenna **14,** a variable gain amplifier**25** coupled to transmit path before the antenna **14,** I and Q receive circuits **40a-40b** coupled downstream from the filter, and a FFT block **23** coupled downstream from the I and Q receive circuits. The FFT block **23** is configured to use the data from the feedback receiver **15** to determine the adjacent channel leakage value. The feedback receiver **15** illustratively includes a variable gain amplifier **25** coupled downstream from the transmit path before antenna **14,** and a phase shifter block **27** coupled between local oscillator **22** and the I and Q receive circuits **40a-40b.**

The FFT block **23** is configured to calculate the FFT at adjacent channel frequency points and compare it with total power. Via this process, the ACLR can be calculated. This ACLR measurement, in addition with power control bits from the wireless base station, can be used as a control signal for changing power amplifier drain voltage and transmitter automatic gain control. The FFT block **23** does not need to generate the ACLR measurement continuously, which could reduce power efficiency of the mobile wireless communications device **10,** but can generate this value based upon events with respect to power control bits so that the feedback receiver **15** circuitry can be switched off for a significant percentage of time, thereby reducing power consumption.

The mobile wireless communications device **10** illustratively includes an oscillator **22** (illustratively shown within the transceiver **12**) configured to generate a local oscillator signal. The I and Q transmit **39a-39b** (FIG. 3) and receive circuits **40a-40b** may be configured to operate based upon the local oscillator signal. In some embodiments, the processor **11** may be configured to selectively operate the I and Q receive circuits **40a-40b** in a power save mode. For example, the processor may only periodically power the I and Q receive circuits **40a-40b** to conserve power.

Referring now additionally to FIG. 3, the modulator **12** illustratively includes I and Q transmit circuits **39a-39b** coupled between the processor **11** and the power amplifier **13.** Each of the I and Q transmit circuits **39a-39b** may comprise a DAC **35a-35b,** a low pass filter **36a-36b** coupled to an output of the DAC, a mixer **37a-37b** coupled to an output of the low pass filter, and an adder block **38** configured to sum the modulated I and Q signals for delivery to the power amplifier **13.**

Another aspect is directed to a method of operating a mobile wireless communications device **10** comprising a processor **11,** a modulator **12** coupled downstream from the processor, a power amplifier **13** coupled downstream from the modulator and having a control voltage input, an antenna **14** coupled downstream from the power amplifier, and a feedback receiver **15** coupled between the antenna and the processor. The method may include determining an adjacent channel leakage value based upon the feedback path **15,** and selectively setting a control voltage for the power amplifier **13** based upon the adjacent channel leakage value (Block **64**).

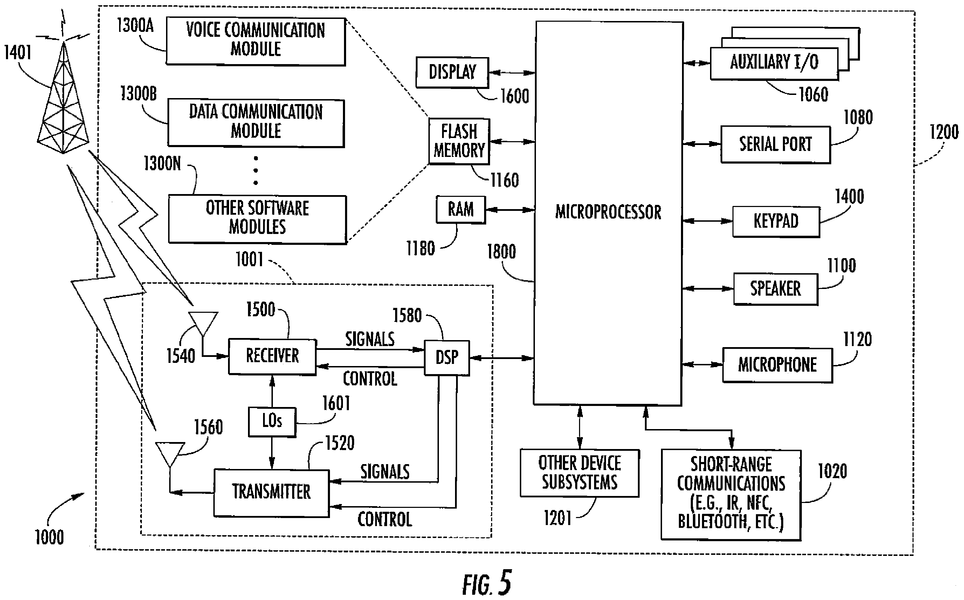

Example components of a mobile wireless communications device **1000** that may be used in accordance with the above-described embodiments are further described below with reference to FIG. 5. The device **1000** illustratively includes a housing **1200,** a keyboard or keypad **1400** and an output device **1600.** The output device shown is a display **1600**, which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a NFC sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications (10) device comprising:
a processor (11);
a modulator (12) coupled downstream from said processor;
a power amplifier (13) coupled downstream from said modulator and having a control voltage input;
an antenna (14) coupled downstream from said power amplifier; and
a feedback path (15) coupled between said antenna and said processor;
said processor coupled to the control voltage input of said power amplifier, said processor configured to
determine an adjacent channel leakage value based upon said feedback path,
and selectively adjust a control voltage for said power amplifier based upon the adjacent channel leakage value, wherein power amplifier loading conditions are taken into account while adjusting the control voltage.

2. The mobile wireless communications device of claim 1 wherein said processor is configured to selectively set the control voltage for said power amplifier based upon a received power control value.

3. The mobile wireless communications device of claim 1 wherein the adjacent channel leakage value comprises an adjacent channel leakage ratio (ACLR) value.

4. The mobile wireless communications device of claim 1 wherein the control voltage comprises a drain/collector bias voltage for said power amplifier.

5. The mobile wireless communications device of claim 1 wherein the control voltage comprises a supply voltage.

6. The mobile wireless communications device of claim 1 further comprising a power supply (21) cooperating with said processor and configured to selectively generate the control voltage.

7. The mobile wireless communications device of claim 1 wherein said modulator comprises In-phase (I) and Quadrature (Q) transmit circuits (39a-39b) coupled between said processor and said power amplifier.

8. The mobile wireless communications device of claim 7 wherein each of said I and Q transmit circuits (39a-39b) comprises a digital-to-analog converter (DAC) (35a-35b), a low pass filter (36a-36b) coupled to an output of said DAC, and a mixer (37a-37b) coupled to an output of said low pass filter.

9. The mobile wireless communications device of claim 7 wherein said feedback path comprises a directional coupler (14a) coupled to upstream of said antenna, I and Q receive circuits (40a-40b) coupled downstream from said directional coupler, and a fast Fourier transform (FFT) block (23) coupled downstream from said I and Q receive circuits.

10. The mobile wireless communications device of claim 9 further comprising an oscillator (22) configured to generate a local oscillator signal; and wherein said I and Q transmit and receive circuits are configured to operate based upon the local oscillator signal.

11. The mobile wireless communications device of claim 9 further comprising a variable gain amplifier (25) coupled downstream from said directional coupler (14a), and a phase shifter block (27) coupled between said oscillator and said I and Q receive circuits.

12. A method of operating a mobile wireless communications device comprising a processor (11), a modulator (12) coupled downstream from the processor, a power amplifier (13) coupled downstream from the modulator and having a control voltage input (21), an antenna (14) coupled downstream from the power amplifier, and a feedback path (15) coupled between the antenna and the processor, the method comprising:
determining an adjacent channel leakage value based upon the feedback path and;
selectively adjusting a control voltage for the power amplifier based upon the adjacent channel leakage value, wherein power amplifier loading conditions are taken into account while adjusting the control voltage.

13. The method of claim 12 further comprising selectively setting the control voltage for the power amplifier based upon a received power control value.

14. The method of claim 12 further comprising generating the adjacent channel leakage value to comprise an adjacent channel leakage ratio (ACLR) value.

15. The method of claim 19 further comprising selectively setting the control voltage to comprise a drain/collector bias voltage for the power amplifier.

## Patentansprüche

1. Mobile Drahtlos-Kommunikationsvorrichtung (10), enthaltend:
einen Prozessor (11);
einen Modulator (12), der stromabwärts des Prozessors gekoppelt ist;
einen Leistungsverstärker (13), der stromabwärts des Modulators gekoppelt ist und einen Steuerspannungseingang hat;
eine Antenne (14), die stromabwärts des Leistungsverstärkers gekoppelt ist; und
einen Rückkopplungsweg (15), der zwischen die Antenne und den Prozessor gekoppelt ist;
wobei der Prozessor mit dem Steuerspannungseingang des Leistungsverstärkers gekoppelt ist, wobei der Prozessor dafür konfiguriert ist,
einen Leckwert eines benachbarten Kanals auf der Basis des Rückkopplungswegs zu ermitteln,
und eine Steuerspannung für den Leistungsverstärker auf der Basis des Leckwerts des benachbarten Kanals selektiv einzustellen, wobei Leistungsverstärker-Ladebedingungen bei der Einstellung der Steuerspannung berücksichtigt werden.

2. Mobile Drahtlos-Kommunikationsvorrichtung nach Anspruch 1, wobei der Prozessor dafür konfiguriert ist, die Steuerspannung für den Leistungsverstärker auf der Basis eines empfangenen Leistungssteuerungswerts selektiv einzustellen.

3. Mobile Drahtlos-Kommunikationsvorrichtung nach Anspruch 1, wobei der Leckwert des benachbarten Kanals einen Leckverhältniswert des benachbarten Kanals (ACLR) umfasst.

4. Mobile Drahtlos-Kommunikationsvorrichtung nach Anspruch 1, wobei die Steuerspannung eine Drain-/Kollektor-Vorspannung für den Leistungsverstärker umfasst.

5. Mobile Drahtlos-Kommunikationsvorrichtung nach Anspruch 1, wobei die Steuerspannung eine Versorgungsspannung umfasst.

6. Mobile Drahtlos-Kommunikationsvorrichtung nach Anspruch 1, ferner enthaltend eine Leistungsversorgung (21), die mit dem Prozessor zusammenarbeitet und dafür konfiguriert ist, die Steuerspannung selektiv zu generieren.

7. Mobile Drahtlos-Kommunikationsvorrichtung nach Anspruch 1, wobei der Modulator Inphase- (I) und Quadratur-(Q)-Übertragungsschaltungen (39a-39b) umfasst, die zwischen den Prozessor und den Leistungsverstärker gekoppelt sind.

8. Mobile Drahtlos-Kommunikationsvorrichtung nach Anspruch 7, wobei die I- und die Q-Übertragungsschaltungen (39a-39b) jeweils einen Digital-Analog-Wandler (DAC) (35a-35b), ein mit einem Ausgang des DAC gekoppeltes Tiefpassfilter (36a-36b) und einen mit dem Ausgang des Tiefpassfilters gekoppelten Mischer (37a- 37b) aufweisen.

9. Mobile Drahtlos-Kommunikationsvorrichtung nach Anspruch 7, wobei der Rückkopplungsweg einen direktionalen Koppler (14a) aufweist, der stromaufwärts der Antenne gekoppelt ist, I- und Q-Empfangsschaltungen (40a-40b), die stromabwärts des direktionalen Kopplers gekoppelt sind, und einen schnelle-Fourier-Transformations-Block (FFT) (23), der stromabwärts der I- und Q-Empfangsschaltungen gekoppelt ist.

10. Mobile Drahtlos-Kommunikationsvorrichtung nach Anspruch 9, ferner enthaltend einen Oszillator (22), der dafür konfiguriert ist, ein lokales Oszillatorsignal zu erzeugen; und wobei die I- und Q- Übertragungs- und Empfangsschaltungen dafür konfiguriert sind, auf der Basis des lokalen Oszillatorsignals zu arbeiten.

11. Mobile Drahtlos-Kommunikationsvorrichtung nach Anspruch 9, ferner enthaltend einen Regelverstärker (25), der stromabwärts des direktionalen Kopplers (14a) gekoppelt ist, und einen Phasenschieberblock (27), der zwischen den Oszillator und die I- und Q-Empfangsschaltungen gekoppelt ist.

12. Verfahren für den Betrieb einer mobilen Drahtlos-Kommunikationsvorrichtung, die einen Prozessor (11), einen stromabwärts des Prozessors gekoppelten Modulator (12), einen stromabwärts des Modulators gekoppelten Leistungsverstärker (13), der einen Steuerspannungseingang (21) hat, eine stromabwärts des Leistungsverstärker gekoppelte Antenne (14) und einen zwischen die Antenne und den Prozessor gekoppelten Rücckopplungsweg (15) aufweist, welches Verfahren umfasst:
Ermitteln eines Leckwerts eines benachbarten Kanals auf der Basis des Rückkopplungswegs; und
selektives Einstellen einer Steuerspannung für den Leistungsverstärker auf der Basis des Leckwerts des benachbarten Kanals, wobei die Leistungsverstärker-Ladebedingungen bei der Einstellung der Steuerspannung berücksichtigt werden.

13. Verfahren nach Anspruch 12, ferner enthaltend das selektive Einstellen der Steuerspannung für den Leistungsverstärker auf der Basis eines empfangenen Leistungssteuerungswerts.

14. Verfahren nach Anspruch 12, ferner enthaltend das Erzeugen des Leckwerts des benachbarten Kanals dergestalt, dass er einen Leckverhältniswert des benachbarten Kanals (ACLR) aufweist.

15. Verfahren nach Anspruch 19, ferner enthaltend das selektive Einstellen der Steuerspannung dergestalt, dass sie eine Drain-/Kollektor-Vorspannung für den Leistungsverstärker umfasst.

## Revendications

1. Dispositif de communications sans fil mobile (10) comprenant :
un processeur (11) ;
un modulateur (12) couplé en aval dudit processeur ;
un amplificateur de puissance (13) couplé en aval dudit modulateur et ayant une entrée de tension de commande ;
une antenne (14) couplée en aval dudit amplificateur de puissance ; et
un chemin de rétroaction (15) couplé entre ladite antenne et ledit processeur ;
ledit processeur étant couplé à l'entrée de tension de commande dudit amplificateur de puissance, ledit processeur étant configuré pour
déterminer une valeur de fuite dans le canal adjacent sur la base dudit chemin de rétroaction,
et ajuster sélectivement une tension de commande pour ledit amplificateur de puissance sur la base de la valeur de fuite dans le canal adjacent, où les conditions de charge de l'amplificateur de puissance sont prises en compte tout en ajustant la tension de commande.

2. Dispositif de communications sans fil mobile de la revendication 1, dans lequel ledit processeur est configuré pour régler sélectivement la tension de commande pour ledit amplificateur de puissance sur la base d'une valeur de commande de puissance reçue.

3. Dispositif de communications sans fil mobile de la revendication 1, dans lequel la valeur de fuite dans le canal adjacent comprend une valeur de rapport de fuite dans le canal adjacent (ACLR).

4. Dispositif de communications sans fil mobile de la revendication 1, dans lequel la tension de commande comprend une tension de polarisation de drain/de collecteur pour ledit amplificateur de puissance.

5. Dispositif de communications sans fil mobile de la revendication 1, dans lequel la tension de commande comprend une tension d'alimentation.

6. Dispositif de communications sans fil mobile de la revendication 1, comprenant en outre un bloc d'alimentation électrique (21) coopérant avec ledit processeur et configuré pour générer sélectivement la tension de commande.

7. Dispositif de communications sans fil mobile de la revendication 1, dans lequel ledit modulateur comprend des circuits d'émission (39a-39b) en phase (I) et en quadrature (Q) couplés entre ledit processeur et ledit amplificateur de puissance.

8. Dispositif de communications sans fil mobile de la revendication 7, dans lequel chacun desdits circuits d'émission I et Q (39a-39b) comprend un convertisseur numérique-analogique (DAC) (35a-35b), un filtre passe-bas (36a-36b) couplé à une sortie dudit DAC, et un mélangeur (37a-37b) couplé à une sortie dudit filtre passe-bas.

9. Dispositif de communications sans fil mobile de la revendication 7, dans lequel ledit chemin de rétroaction comprend un coupleur directionnel (14a) couplé à l'amont de ladite antenne, des circuits de réception I et Q (40a-40b) couplés en aval dudit coupleur directionnel, et un bloc (23) de transformée de Fourier rapide (FFT) couplé en aval desdits circuits de réception I et Q.

10. Dispositif de communications sans fil mobile de la revendication 9, comprenant en outre un oscillateur (22) configuré pour générer un signal d'oscillateur local ; et dans lequel lesdits circuits d'émission et de réception I et Q sont configurés pour fonctionner sur la base du signal d'oscillateur local.

11. Dispositif de communications sans fil mobile de la revendication 9, comprenant en outre un amplificateur à gain variable (25) couplé en aval dudit coupleur directionnel (14a), et un bloc déphaseur (27) couplé entre ledit oscillateur et lesdits circuits de réception I et Q.

12. Procédé de fonctionnement d'un dispositif de communications sans fil mobile comprenant un processeur (11), un modulateur (12) couplé en aval du processeur, un amplificateur de puissance (13) couplé en aval du modulateur et ayant une entrée de tension de commande (21), une antenne (14) couplée en aval de l'amplificateur de puissance, et un chemin de rétroaction (15) couplé entre l'antenne et le processeur, le procédé comprenant :
la détermination d'une valeur de fuite dans le canal adjacent sur la base du chemin de rétroaction et ;
l'ajustement sélectif d'une tension de commande pour l'amplificateur de puissance sur la base de la valeur de fuite dans le canal adjacent, où les conditions de charge de l'amplificateur de puissance sont prises en compte tout en ajustant la tension de commande.

13. Procédé de la revendication 12, comprenant en outre le réglage sélectif de la tension de commande pour l'amplificateur de puissance sur la base d'une valeur de commande de puissance reçue.

14. Procédé de la revendication 12, comprenant en outre la génération de la valeur de fuite dans le canal adjacent pour comprendre une valeur de rapport de fuite dans le canal adjacent (ACLR).

15. Procédé de la revendication 19, comprenant en outre le réglage sélectif de la tension de commande pour comprendre une tension de polarisation de drain/de collecteur pour l'amplificateur de puissance.
